# EUROPEAN PATENT SPECIFICATION

(11) **EP 1 510 127 B1**
(45) Date of publication and mention of the grant of the patent: **22.01.2014**
(21) Application number: 04253254.9
(22) Date of filing: 01.06.2004
(51) Int. Cl.: A01K 95/02, A01K 91/047, A01K 91/04

(54) **Hooklink and lead discharge system**
Verbindung zwischen Angelhaken und Angelleine
Connecteur entre l'hameçon et la ligne de pêche

(30) Priority: 08.08.2003 GB 0318732
(43) Date of publication of application: 02.03.2005
(73) Proprietor: Korda Developments Limited, Basildon, Essex SS14 3DA (GB)
(72) Inventor: Fairbrass, Daniel, c/o Korda Developments Limited, Romford, Essex RM1 4GT (GB)
(74) Representative: Brookes Batchellor LLP

(56) References cited:
- EP-A2- 1 264 542
- GB-A- 2 354 146

## Description

The present invention relates to a hooklink and lead discharge system for an angler's rig. The present invention also relates to a hooklink swivel for use in such a system.

A known hooklink and lead discharge system includes a small hooklink swivel having a central body, or barrel, with two rings provided at opposite ends of the body. The rings may separately freely rotate about a mutual longitudinal axis passing through the barrel. The barrel and one of the rings is, in use, seated within a lead clip. The lead clip comprises an elongate tubular sheath having a head end, a relatively thin tail end and a clip arm running along the outside of the sheath, and attached thereto at the head end and free at the tail end.

To set up a hooklink and lead discharge system a fishing line from a rod is passed through the central bore of the lead clip from the tail end in the direction of the head end and tied to one of the rings of the hooklink swivel: the central bore being of a larger diameter at the head end of the sheath than at the tail end. A hook line attached to a hook is tied to the other of the two rings and the lead clip is positioned over the swivel so that the barrel and the fishing line ring of the swivel are seated within the head end of the lead clip. Typically the swivel is held in the lead clip by an interference fit.

A weight, typically and herein referred to as a lead, is slipped over the clip arm. A capping piece having a central bore through which the fishing line passes may be slid over the tail end of the lead clip to cover the tail end of the sheath and the free end of the clip arm thereby preventing the lead detaching during casting.

An important feature of a lead clip is that it allows the lead to discharge, that is to come away from the clip, in the event of the lead becoming trapped by or entangled in an underwater obstacle when a fish has been hooked. Should the lead not discharge, unnecessary suffering will be inflicted on a hooked fish pulling on the hook line.

For instance, a lead may become entangled in an underwater obstruction the pull of the fish on the hook line may cause the swivel to unseat from the lead clip before the lead discharges leaving an angler to unwittingly play the fish on his or her line running freely through the tethered lead clip, thereby causing distress to the fish.

Thus it is important that the swivel is securely retained within the lead clip so that the fish is able pull the lead clip away from the entangled lead rather than pulling the fishing line through the lead clip.

Attempts have been made by prior art hooklink and lead discharge systems to ensure that the swivel is retained within the lead clip, but all have their limitations. Nash Tackle of Rayleigh, Essex provide a "Safety Bolt Bead" disclosed in GB2354146 wherein the lead clip includes a traverse bore, alignable with a the fishing line ring of a swivel, through which a piece of low breaking strength braid may be passed and tied in a simple overhand knot. However, such a system presupposes the an angler knows the force required to separate the lead from the lead clip and selects a braid of appropriate breaking strength to secure the swivel within the lead clip. Furthermore it is difficult to ensure that the freely rotating swivel ring is correctly aligned with the traverse bore.

Armaled International of Stoke-on-Trent, Staffordshire provide a lead clip having a head end with a longitudinal hinge that allows the head end to be opened to receive a swivel in an inner locking chamber and then closed around the swivel. It is imperative in using this hinged lead clip that an angler has a suitable swivel. Using a non-compatible swivel can put a strain on the lead clip causing it to open during use, freeing the swivel and thereby preventing lead discharge.

Another angling rig device is disclosed in EP1264542.

Against this background, In accordance with a first aspect of the invention there is provided a hooklink and lead discharge system, comprising: an elongate body having means for attachment to a hook line at one end, means for attachment to a rod line at the other end, and a clip arm extending alongside the body between its ends to form a clip with said body, said clip being closed at the hook line end and openable at the rod line end. The construction ensures the line does not pull through the discharge system. The means for attachment to a hook line is preferably swivelable in relation to the body.

At least one of the means for attachment preferably comprises a loop, a ring, or an eye.

In one preferred construction, the body comprises a core to one end of which the means for attachment to a hook line is swivelably connected, and a sheath including the clip, surrounding the core leaving the two means for attachment free beyond the sheath, the means for attachment to a hook line being also free to swivel.

The sheath may be formed by injection moulding or casting a plastics material round the core.

Especially if the sheath is formed other than by injection moulding or casting, e.g. as an openable body, one or both of the means for attaching, and/or the barrel, have features too large to pass through the sheath, so as to prevent removal thereof.

The core may be a barrel having an arm extending from each of two opposite ends thereof, wherein one arm is substantially longer than the other.

In another aspect, the invention extends to a hooklink swivel for an angler's rig, comprising:
a body having an arm extending from each of two opposite ends thereof, wherein one arm is substantially longer than the other.

The invention will now be further described, by way of example only, with reference to the figures of the accompanying drawings, of which:

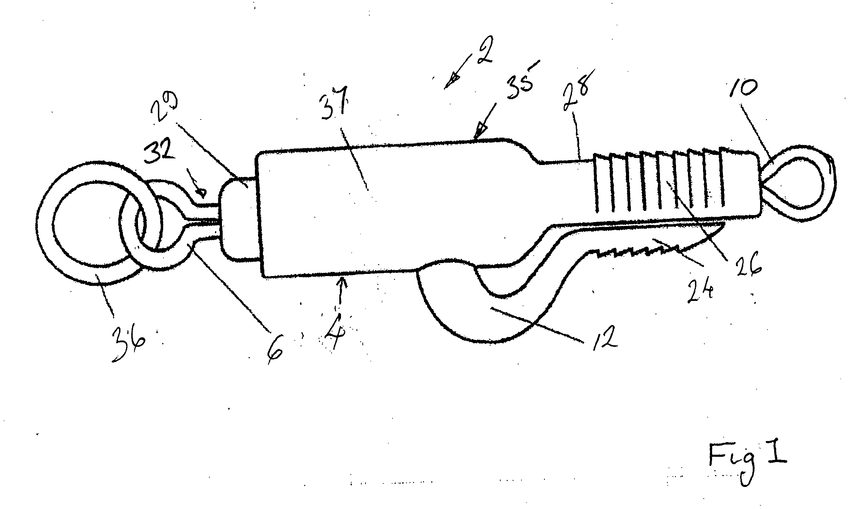

Figure 1 shows a hooklink and lead discharge system embodying the invention;

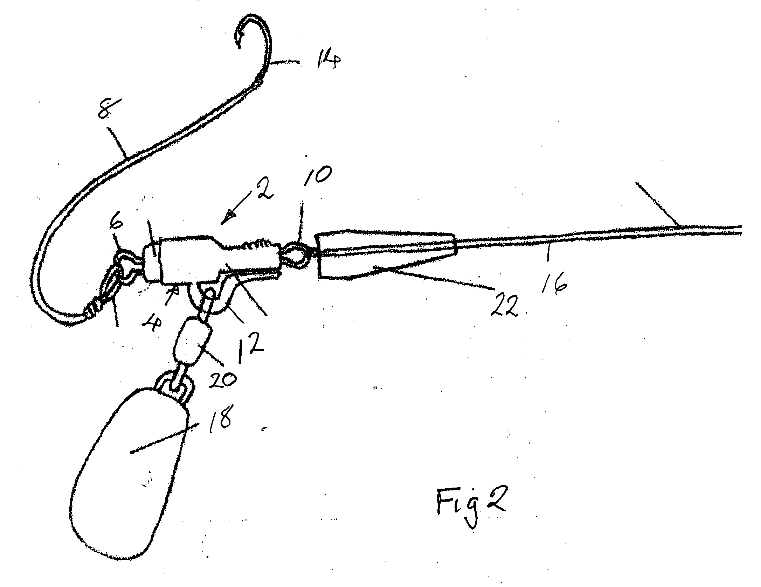

Figure 2 shows the hooklink and lead discharge system of Figure 1 as part of an angler's rig; and

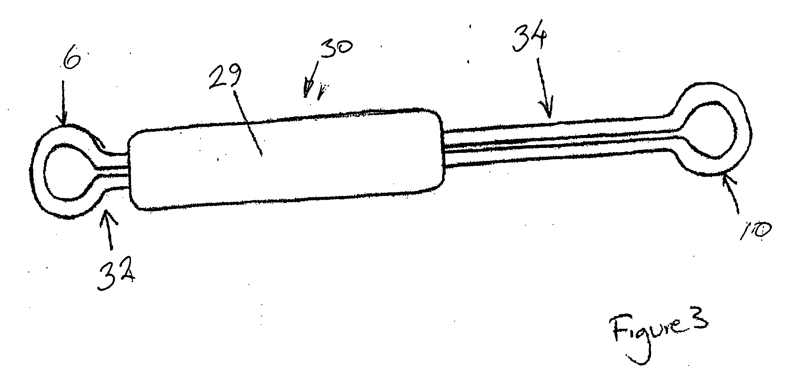

Figure 3 shows a swivel for use in the hooklink and lead discharge system of Figure 1.

The hooklink and lead discharge system 2 has a body 4. From one end of the body extends means, in the form of a loop 6, for attaching a hookline 8. From the other end of the body, extends means, in the form of a loop 10, for attaching a rod line. Alongside the body extends a clip arm 12 which is attached to the body at one end so as to form a clip with the body. The clip is closed at the hook line end, where the clip arm is attached and is sufficiently resilient to be openable at the other (rod line) end.

In use, a hook line 8 bearing a hook 14 is tied to the loop 6. A fishing line 16 from the angler's rod (not shown) is tied to the loop 10. A lead 18 is fed onto the clip arm 12 via a ring or a swivel 20. A, typically, rubberised, capping piece 22 previously fed onto the fishing line 16 may be slid over the tail end 28 of the body and the free end of the clip arm 12 thereby closing the clip for casting. Serations 24 and 26 may be provided on the tail end 28 and the clip arm 12 to help keep the capping piece (22) in place in normal use.

In the event of the lead 18 becoming entangled in an underwater obstruction, the clip arm 12 is pulled through the ring or swivel 20 discharging the lead 18 before any excess damage is suffered by the fish.

In more detail, the body 4 comprises a core in the form of the barrel 29 of a swivel 30. First and second arms 32 and 34 extend from opposite ends of the barrel. Each of the arms 32 and 34 has an end retained within the barrel 29 and is formed into a respective one of the loops 6 and 10 at its free end. Optionally, a ring 36 may be provided on each loop. The arm 32 is swivelable in relation to the barrel. The arm 34 may be restricted as will become clear. The second arm 34 is substantially longer than the first arm 32.

The body 4 further comprises an elongate tubular sheath 35 having a relatively wide head end 37, and provides the relatively thin tail end 28. The clip arm 12 extends along the outside of the sheath, is attached to it at the head end 36 and is free but close to or touching the sheath at the tail end 28. The clip arm 12 is shaped to allow a lead 18 to be slipped onto it, typically via a ring or a swivel 20.

The sheath 35 has a central longitudinal passage. The passage is relatively wide at the head end 36 is relatively narrow at the tail end 28.

The passage may be cylindrical and of sufficient diameter to receive the barrel 29 at the head end 36 and of sufficient diameter to receive the second arm 34 at the tail end 28. The diameter of the passage at the tail end is insufficient to accommodate the barrel 29 or the loop 10 or ring 36. Thus, the swivel 30 is securely retained within the sheath.

To assemble the swivel within the sheath, the latter could be openable and held closed by suitable means, e.g. welding or snap fastening. More preferably, the sheath is formed in plastics by injection moulding or casting around the swivel. In either case, there may be sufficient adherance between the barrel and the sheath for there to be no need for the barrel or loop 10 or ring 36 to have features too large to pass through the passage at the tail end. Also in this case the arm 34 would not swivel in relation to the barrel.

The hooklink and lead discharge system, in contrast to prior art devices, is provided to anglers as a single piece of kit for their rigs and so eliminates the need to ensure that a correct stock of complementary swivels and lead clips is maintained. The present invention makes it impossible to select an incorrect or inappropriate swivel for the rig. It is a straightforward matter to produce the integrated hooklink and lead discharge system, conveniently by injection moulding, although other methods of manufacture will also be apparent to those skilled in the art. Another advantage provided by the invention is that the fishing line may be attached directly to the loop 10 of the second arm 34 without being first threaded through a lead clip.

## Claims

1. A hooklink and lead discharge system (2), comprising: an elongate body (4) having means (6) for attachment to a hook line (8) at one end, means (10) for attachment to a rod line (16) at the other end, and **characterized by** a clip arm (11) extending along side the body (4) between its ends to form a clip with the body (4), said clip being closed at the hook line end (37) and openable at the rod line end (28).

2. A hooklink and lead discharge system (2), as claimed in claim 1, wherein the means (6) for attachment to a hook line (8) is swivelable in relation to the body (4).

3. A hooklink and lead discharge system (2), as claimed in claim 1 or 2, wherein at least one of the means for attachment (6, 10) comprises a loop, a ring, or an eye.

4. A hooklink and lead discharge system (2), as claimed in any preceding claim, wherein the body (4) comprises a core to one end of which the means (6) for attachment to a hook line (8) is swivelably connected, and a sheath (35) including the clip (12), surrounding the core leaving the two means for attachment (6, 10) free beyond the sheath (35), the means (6) for attachment to a hook line (8) being also free to swivel.

5. A hooklink and lead discharge system (2), as claimed in claim 4, wherein the sheath (35) is formed by injection moulding or casting a plastics material round the core.

6. A hooklink and lead discharge system (2), as claimed in claim 4 or 5, wherein one or both of the means for attaching (6, 10), and/or the barrel (29), have features too large to pass through the sheath (35), so as to prevent removal thereof.

7. A hooklink and lead discharge system (2), as claimed in any of claims 4 to 6, wherein the core is a barrel (29) having an arm (32, 34) extending from each of two opposite ends thereof, wherein one arm (34) is substantially longer than the other (32).

8. A hooklink swivel (30) for an angler's rig, comprising:
a body (29) having an arm (32, 34) extending from each of two opposite ends thereof, **characterized in that** one arm (34) is substantially longer than the other (32).

## Patentansprüche

1. Haken-Verbindungsglied und Blei-Freisetzungssystem (2), das einen länglichen Körper (4) mit einem Mittel (6) zum Befestigen an einer Hakenschnur (8) an einem Ende und einem Mittel (10) zum Befestigen an einer Angelschnur (16) an dem anderen Ende aufweist, und das durch einen Klammerarm (11) gekennzeichnet ist, der sich entlang des Körpers (4) zwischen dessen Enden erstreckt, um eine Klammer mit dem Körper (4) zu bilden, wobei die Klammer an dem Hakenschnurende (37) geschlossen und an dem Angelschnurende (28) öffenbar ist.

2. Haken-Verbindungsglied und Blei-Freisetzungssystem (2) nach Anspruch 1, wobei das Mittel (6) zum Befestigen an einer Hakenschnur (8) relativ zu dem Körper (4) drehbar ist.

3. Haken-Verbindungsglied und Blei-Freisetzungssystem (2) nach Anspruch 1 oder 2, wobei wenigstens eines der Mittel (6, 10) zum Befestigen eine Schlaufe, einen Ring oder ein Auge aufweist.

4. Haken-Verbindungsglied und Blei-Freisetzungssystem (2) nach einem der vorstehenden Ansprüche, wobei der Körper (4) einen Kern, mit dessen einem Ende das Mittel (6) zum Befestigen an einer Hakenschnur (8) drehbar verbunden ist, und eine die Klammer (12) umfassende Umhüllung (35) aufweist, die den Kern umgibt und die zwei Mittel (6, 10) zum Befestigen jenseits der Umhüllung frei lässt, wobei das Mittel (6) zum Befestigen an einer Hakenschnur (8) auch frei ist, sich zu drehen.

5. Haken-Verbindungsglied und Blei-Freisetzungssystem (2) nach Anspruch 4, wobei die Umhüllung (35) durch Spritzguss oder Gießen eines Plastikmaterials um den Kern herum gebildet wird.

6. Haken-Verbindungsglied und Blei-Freisetzungssystem (2) nach Anspruch 4 oder 5, wobei eines oder beide der Mittel (6, 10) zum Befestigen und/oder die Trommel (29) Merkmale haben, die zu groß sind, um durch die Umhüllung (35) zu passen, um ein Entfernen davon zu verhindern.

7. Haken-Verbindungsglied und Blei-Freisetzungssystem (2) nach einem der Ansprüche 4 bis 6, wobei der Kern eine Trommel (29) mit einem Arm (32, 34) ist, der sich von jedem zweier gegenüberliegender Enden davon erstreckt, wobei ein Arm (34) wesentlich länger als der andere (32) ist.

8. Haken-Verbindungsglied-Drehzapfen (30) für eine Angelausrüstung, der aufweist:
einen Körper (29) mit einem Arm (32, 34), der sich von jedem zweier gegenüberliegender Enden davon erstreckt, **dadurch gekennzeichnet, dass** ein Arm (34) wesentlich länger als der andere (32) ist.

## Revendications

1. Connecteur (2) entre l'hameçon et la ligne de pêche, comprenant : un corps allongé (4) ayant un moyen de fixation (6) à un hameçon (8) à une extrémité, un moyen de fixation (10) à une ligne de pêche (16) à l'autre extrémité, et **caractérisé par** un bras d'attache (11) s'étirant le long du corps (4) entre ses extrémités afin de former une attache avec le corps, ladite attache étant fermée à l'extrémité côté hameçon (37) et ouvrable à l'extrémité côté ligne de pêche (28).

2. Connecteur (2) entre l'hameçon et la ligne de pêche selon la revendication 1, dans lequel le moyen de fixation (6) à un hameçon (8) peut pivoter par rapport au corps (4).

3. Connecteur (2) entre l'hameçon et la ligne de pêche selon la revendication 1 ou 2, dans lequel l'un au moins des moyens de fixation (6, 10) est constitué d'une boucle, d'une bague ou d'un oeil.

4. Connecteur (2) entre l'hameçon et la ligne de pêche selon l'une quelconque des revendications précédentes, dans lequel le corps (4) comprend un noyau à l'une des extrémités duquel est monté à rotation le moyen de fixation (6) à un hameçon (8), et un fourreau (35) intégrant l'attache (12) et entoure le noyau en laissant les deux moyens de fixation (6, 10) libres au-delà du fourreau (35), le moyen de fixation (6) à un hameçon (8) étant lui aussi libre de pivoter.

5. Connecteur (2) entre l'hameçon et la ligne de pêche selon la revendication 4, dans lequel le fourreau (35) est formé par moulage par injection ou coulée de matière plastique autour du noyau.

6. Connecteur (2) entre l'hameçon et la ligne de pêche selon la revendication 4 ou 5, dans lequel l'un des moyens de fixation ou les deux (6, 10), et/ou le barillet (29), présentent des caractéristiques trop grandes pour passer à travers le fourreau (35) de manière à éviter qu'ils s'en détachent.

7. Connecteur (2) entre l'hameçon et la ligne de pêche selon l'une quelconque des revendications 4 à 6, dans lequel le noyau est un barillet (29) présentant un bras (32, 34) qui s'étire à partir de chacune de ses deux extrémités opposées, l'un des bras (34) étant sensiblement plus long que l'autre (32).

8. Pivot (30) d'hameçon pour matériel de pêche, comprenant :
un corps (29) ayant un bras (32, 34) s'étirant à partir de chacune de ses deux extrémités opposées, **caractérisé en ce que** l'un des bras (34) est sensiblement plus long que l'autre (32).
